# EUROPÄISCHE PATENTSCHRIFT

(11) **EP 1 034 413 B1**
(45) Veröffentlichungstag und Bekanntmachung des Hinweises auf die Patenterteilung: **17.03.2004**
(21) Anmeldenummer: 98948735.0
(22) Anmeldetag: 06.08.1998
(51) Int. Cl.: G01B 11/06

(54) **ELLIPSOMETER-MESSVORRICHTUNG**
ELLIPSOMETER MEASURING INSTRUMENT
DISPOSITIF DE MESURE A ELLIPSOMETRE

(30) Priorität: 11.08.1997 DE 19734646
(43) Veröffentlichungstag der Anmeldung: 13.09.2000
(73) Patentinhaber: ROBERT BOSCH GMBH, 70442 Stuttgart (DE)
(72) Erfinder: HAHN, Jürgen, D-72581 Dettingen (DE); KÜHNLE, Götz, D-71282 Hemmingen (DE)
(86) Internationale Anmeldenummer: PCT/DE1998/002260
(87) Internationale Veröffentlichungsnummer: WO 1999/008068

(56) Entgegenhaltungen:
- EP-A- 0 397 388
- WO-A-96/29583
- WO-A-97/35177
- US-A- 4 647 207
- US-A- 4 872 758
- US-A- 5 333 052
- US-A- 5 757 494

## Beschreibung

### Stand der Technik

Die Erfindung bezieht sich auf eine Ellipsometer-Meßvorrichtung zum Bestimmen der Dicke einer auf einem Substrat aufgebrachten Schicht mit einer einen Eingangsstrahl abgebenden Lichtquelle, einer den polarisierten Eingangsstrahl zu einem Auftreffpunkt des Substrats leitenden Sendeoptik und einer den am Auftreffpunkt gebildeten Reflexionsstrahl zu einer Fotoempfängereinrichtung leitenden, einen Analysator aufweisenden, Empfangsoptik, wobei die Polarisationsrichtung des Eingangsstrahls und des Analysators zeitlich relativ zueinander geändert und die dadurch erzeugten Intensitätsänderungen mittels einer Auswerteeinrichtung zur Bestimmung der Schichtdicke ausgewertet werden.

Eine derartige Ellipsometer-Meßvorrichtung ist in Bosch Technische Berichte, Band 4 (1974), Heft 7, Seiten 315 bis 320 beschrieben. Mit einer derartigen Meßvorrichtung kann z.B. die Dicke von Schutzschichten auf aluminiumbeschichteten Scheinwerferreflektoren in Form eines Spiegelparaboloids mit großem Öffnungsverhältnis gemessen werden, wobei die Schichtdicken im Bereich von 10 bis 50 nm liegen und eine Auflösung in der Größenordnung eines Nanometers erreichbar ist. Hierzu wird ein polarisierter Einfallsstrahl unter vorgegebenem Einfallswinkel auf einen Meßpunkt des Scheinwerferreflektors gerichtet und unter einem ebenfalls fest vorgegebenen Winkel reflektiert. Der reflektierte Strahl ist'elliptisch polarisiert und wird zum Bestimmen der Elliptizität durch einen rotierenden Analysator auf einen Fotoempfänger geleitet, an dem entsprechend der Elliptizität Intensitätsschwankungen des Lichtsignals erfaßt werden. Die Elliptizität und damit die Intensitätsänderung ist abhängig von der Schichtdicke, so daß diese in einer nachgeschalteten Auswerteeinrichtung bestimmt werden kann. Der Winkel des Einfallsstrahls bzw. des Reflexionsstrahls bezüglich der Tangentialebene bzw. der Normalen im Meßpunkt ist häufig schwierig einstellbar, und eine genaue Justierung ist an schwer zugänglichen Stellen oder wechselnden Krümmungsverläufen, wie bei modernen Scheinwerfern, kaum möglich.

Weiterhin sind Schichtdickenmeßgeräte aus EP-A-0 397 388 und US-A-4 872 758 bekannt.

### Vorteile der Erfindung

Der Erfindung liegt die Aufgabe zugrunde, eine Ellipsometer-Meßvorrichtung der eingangs angegebenen Art bereitzustellen, die bei einfacher Justierung und Handhabung auch an schwer zugänglichen Stellen und bei unterschiedlichen Krümmungsverläufen genaue Meßergebnisse liefert.

Diese Aufgabe wird mit den Merkmalen des Anspruchs 1 gelöst. Hiernach ist also eine Winkelmeßeinrichtung vorgesehen, mit der der Winkel des Reflexionsstrahls relativ zu einer Tangentialebene des Substrats am Auftreffpunkt erfaßbar ist und daß die Schichtdicke mittels der Auswerteeinrichtung in Abhängigkeit des erfaßten Winkels bestimmbar ist. Dadurch, daß der Winkel des Reflexionsstrahls erfaßt und zur Berechnung der Schichtdicke mit ausgewertet wird, kann die Meßvorrichtung auf einfache Weise auf der Schicht aufgesetzt und die Messung leicht vorgenommen werden. Der sich ergebende Winkel wird dabei automatisch genau berücksichtigt und bei der Berechnung der Schichtdicke nach an sich bekannten Algorithmen einbezogen.

Die Messung des Winkels kann auf einfache Weise dadurch erfolgen, daß die Winkelmeßeinrichtung eine in x- und/oder y-Richtung positionsempfindliche Fotoempfängereinheit sowie eine Auswertestufe aufweist, mit der aus den Positionsdaten und aus Abstandsdaten der Reflexionswinkel errechenbar ist. Untersuchungen haben ergeben, daß bereits eine eindimensionale Winkelerfassung zu guten Meßergebnissen für die Schichtdicke führt.
Der einfache Aufbau wird dadurch begünstigt, daß die Intensitätsänderungen und die Position des Reflexionsstrahls mit demselben Fotoempfänger der Fotoempfängereinrichtung erfaßt werden.

Eine weitere Möglichkeit für eine einfache Bestimmung des Winkels besteht darin, daß die Fotoempfängereinheit zwei in unterschiedlichem Abstand von dem Auftreffpunkt im Strahlengang des Reflexionsstrahls angeordnete positionsempfindliche Fotoempfänger aufweist und daß der Winkel auf der Grundlage der unterschiedlichen Positionen des Reflexionsstrahls auf den beiden Fotoempfängern errechnet wird. Auch hierbei kann einer der Fotoempfänger gleichzeitig zur Messung der Intensitätsänderungen des Reflexionsstrahls ausgenutzt werden.

Bei Bestimmung des Winkels mittels zweier Fotoempfänger kann der Aufbau beispielsweise derart sein, daß in dem Strahlengang des Reflexionsstrahls vor den beiden Fotoempfängern ein Strahlteiler angeordnet ist und daß jeder Fotoempfänger einen Teilstrahl des Reflexionsstrahls empfängt. Alternativ können die beiden Fotoempfänger auch hintereinander angeordnet sein, wobei ein Teil des Reflexionsstrahls den vorderen Fotoempfänger durchläuft.

Bei Verwendung nur eines Fotoempfängers ist vorteilhaft vorgesehen, daß vor der Fotoempfängereinrichtung eine Sammellinse angeordnet ist.

Die einfache Handhabung wird dadurch unterstützt, daß die Sendeoptik und die Empfangsoptik in einem gemeinsamen Träger integriert sind und daß der Träger zum Aufstellen auf der Schicht eine Dreipunktauflage aufweist. Durch diesen Aufbau wird stets auch eine eindeutige Auflage auf der Schicht gewährleistet. Die Dreipunktauflage kann dabei z.B. in einer Kugelauflage bestehen, durch die einerseits eine punktuelle Auflage an den drei Auflagestellen gewährleistet ist und andererseits eine Beschädigung der Schicht vermieden wird.

Zum Erzielen zuverlässiger Meßergebnisse hat sich ein Aufbau als vorteilhaft erwiesen, bei dem die Sendeoptik im Strahlengang des Eingangsstrahls einen .Polarisator und eine λ/4-Platte aufweist und daß der Polarisator oder der Analysator um eine zu seiner Fläche normale Achse rotierend antreibbar angeordnet ist.

Die Erfindung wird nachfolgend anhand von Ausführungsbeispielen unter Bezugnahme auf die Zeichnungen näher erläutert. Es zeigen:
- Fig. 1: eine schematische Darstellung einer Ellipsometer-Meßvorrichtung in teilweise geschnittener Seitenansicht und
- Fig. 2: eine Seitenansicht einer weiteren Ellipsometer-Meßvorrichtung.

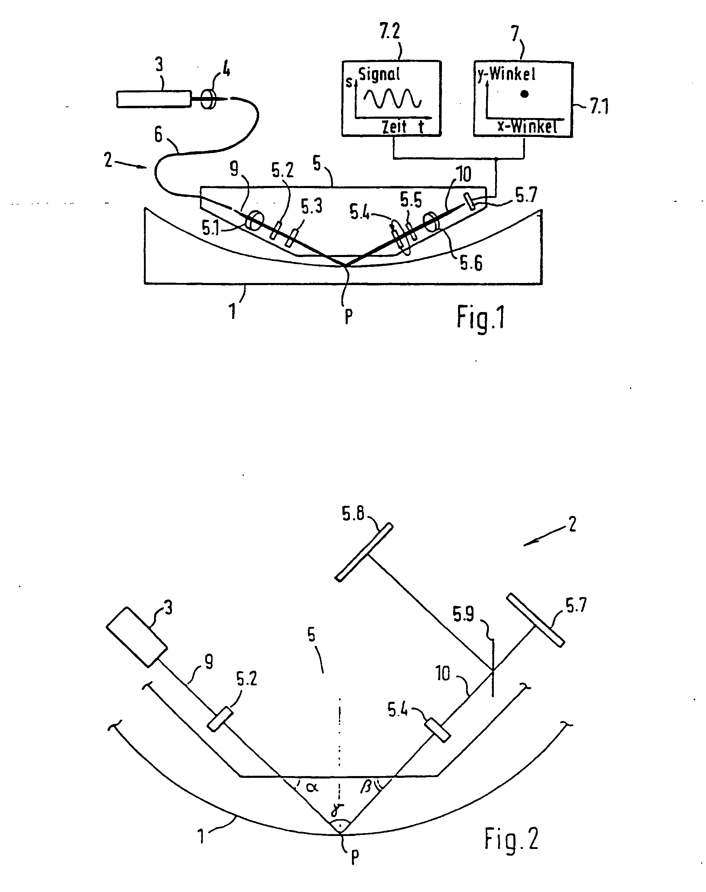

Fig. 1 zeigt ein Meßobjekt 1 aus einem Substrat und einer auf dessen konkav gewölbten Innenseite aufgebrachten Schicht, deren Dicke an einem Meßpunkt P mittels einer Meßanordnung 2 gemessen werden soll.

Die Meßanordnung 2 besitzt einen Laser 3, eine diesem vorgeschaltete Linse 4, einen Lichtleiter 6, eine Meßsonde 5 sowie eine Auswerteeinrichtung 7. Der von dem Laser 3 erzeugte Lichtstrahl gelangt über die vorgeschaltete Linse 4 und den Lichtleiter 6 als Eingangsstrahl 9 in die Meßsonde 5 und wird mit dieser über eine Sendeoptik mit einer Linse 5.1, einem Polarisator 5.2 und einer λ/4-Platte 5.3 auf den Meßpunkt bzw. Auftreffpunkt P des Meßobjekts 1 gerichtet.

Der an dem Auftreffpunkt P reflektierte Strahl in Form des Reflexionsstrahls 10 durchläuft in einer Empfangsoptik einen rotierend angetriebenen Analysator 5.4, einen Filter 5.5 sowie eine Sammellinse 5.6 und wird von dieser auf einem Fotoempfänger 5.7 fokussiert. Der Fotoempfänger 5.7 gehört zu einer Fotoempfängereinrichtung, die einerseits Intensitätsschwankungen des Reflexionsstrahls 10 und andererseits den Auftreffort auf dem Fotoempfänger 5.7 feststellt. Der Fotoempfänger 5.7 kann beispielsweise ein positionsempfindlicher Detektor (PSD) oder eine CCD-Kamera sein. In der Auswerteeinrichtung 7 ist ein Positionsmesser 7.1 für eine x- und/oder y-Position vorgesehen. Unter Berücksichtigung des Abstands von dem Auftreffpunkt P wird der x- und/oder y-Winkel berechnet. Zum andern ist ein Intensitätsmesser 7.2 vorgesehen, der die durch die Rotation des Analysators 5.7 erzeugten Intensitätsschwankungen des Reflexionsstrahls 10 erfaßt und zur Berechnung der Elliptizität dient.

Aus der Elliptizität läßt sich unter Einrechnung des aus dem x- und/oder dem y-Winkel ermittelten Reflexionswinkels die Schichtdicke nach an sich bekannten Algorithmen ermitteln. Zur Bestimmung der Schichtdicke können dabei z.B. auch empirische, tabellierte Werte herangezogen werden, die in einem Speicher abgelegt sind.

Während bei dem Aufbau nach Fig. 1 derselbe Fotoempfänger 5.7 für die Messung der Intensitätsänderung und die Berechnung des Winkels ausgenutzt wird, sind bei dem ansonsten entsprechenden Aufbau gemäß Fig. 2 zwei Fotoempfänger 5.7 und 5.8 zur Bestimmung des Winkels vorgesehen, die von dem Auftreffpunkt P unterschiedlichen Abstand haben. Der Reflexionsstrahl 10 wird an einem Strahlteiler 5.9 in zwei Teilstrahlen aufgeteilt, die unterschiedliche Weglängen bis zu den zugeordneten Fotoempfängern 5.7 bzw. 5.8 durchlaufen. Aus den auf den beiden Fotoempfängern 5.7 und 5.8 .unterschiedlichen x- und/oder y-Positionen können in Abhängigkeit von den unterschiedlichen Weglängen der x- und y-Winkel und daraus der Reflexionswinkel ermittelt werden. Einer der beiden Fotoempfänger 5.7 und 5.8 kann gleichzeitig für die Intensitätsmessung herangezogen werden. In Fig. 2 sind auch der Winkel α des Einfallstrahls 9 bezüglich einer Tangentialebene am Auftreffpunkt P, der Winkel β des Reflexionsstrahls 10 ebenfalls bezüglich der Tangentialebene sowie ein Winkel γ zwischen dem Einfallsstrahl und dem Reflexionsstrahl angegeben.

Anstelle des in Fig. 1 gezeigten, um eine Flächennormale drehbaren Analysators 5.4 kann dieser auch durch einen feststehenden Analysator ersetzt werden und stattdessen ein rotierender Polarisator 5.2 in der Sendeoptik vorgesehen werden. Es hat sich gezeigt, daß damit die Zuverlässigkeit der Meßergebnisse erhöht werden kann.

Die Sendeoptik und die Empfangsoptik sind in einem gemeinsamen Träger eingebaut, der mit einer Dreipunktauflage, vorzugsweise in Form von Kugeln oder Kugelkalotten versehen, so daß eine eindeutige Auflage der Meßvorrichtung auf dem Meßobjekt 1 auch an schwer zugänglichen Stellen und bei unterschiedlichen Krümmungen erzielt wird. Die Meßvorrichtung ist als Sonde leicht handhabbar und wegen der automatischen Erfassung des Winkels des Reflexionsstrahls einfach zu justieren.

## Patentansprüche

1. Ellipsometer-Meßvorrichtung zum Bestimmen der Dicke einer auf einem Substrat aufgebrachten Schicht mit einer einen Eingangsstrahl (9) abgebenden Lichtquelle (3), einer den polarisierten Eingangsstrahl (9) zu einem Auftreffpunkt (P) des Substrats leitenden Sendeoptik und einer den am Auftreffpunkt (P) gebildeten Reflexionsstrahl (10) zu einer Fotoempfängereinrichtung (5.7, 5.8) leitenden, einen Analysator (5.4) aufweisenden Empfangsoptik, wobei die Polarisationsrichtung des Eingangsstrahls (9) und des Analysators (5.4) zeitlich relativ zueinander geändert und die dadurch erzeugten intensitätsänderungen mittels einer Auswerteeinrichtung (7) zur Bestimmung der Schichtdicke ausgewertet werden,
**dadurch gekennzeichnet,**
**daß** eine Winkelmeßeinrichtung (5.7, 5.8, 7.1) vorgesehen ist, mit der der Winkel (β) des Reflexionsstrahls (10) relativ zu einer Tangentialebene des Substrats (1) am Auftreffpunkt (P) erfaßbar ist und
**daß** die Schichtdicke mittels der Auswerteeinrichtung (7) in Abhängigkeit des erfaßten Winkels (β) bestimmbar ist.

2. Meßvorrichtung nach Anspruch 1,
**dadurch gekennzeichnet,**
**daß** die Winkelmeßeinrichtung eine in x- und/oder y-Richtung positionsempfindliche Fotoempfängereinheit (5.7, 5.8) sowie eine Auswertestufe aufweist, mit der aus den Positionsdaten und aus Abstandsdaten der Reflexionswinkel (β) errechenbar ist.

3. Meßvorrichtung nach Anspruch 2,
**dadurch gekennzeichnet,**
**daß** die Intensitätsänderungen und die Position des Reflexionsstrahls (10) mit demselben Fotoempfänger (5.7) der Fotoempfängereinrichtung erfaßt werden.

4. Meßvorrichtung nach Anspruch 2 oder 3,
**dadurch gekennzeichnet,**
**daß** die Fotoempfängereinheit zwei in unterschiedlichem Abstand von dem Auftreffpunkt (P) im Strahlengang des Reflexionsstrahls (10) angeordnete positionsempfindliche Fotoempfänger (5.7, 5.8) aufweist und daß der Winkel (β) auf der Grundlage der unterschiedlichen Positionen des Reflexionsstrahls (10) auf den beiden Fotoempfängern (5.7, 5.8) errechnet wird.

5. Meßvorrichtung nach Anspruch 4,
**dadurch gekennzeichnet,**
**daß** in den Strahlengang des Reflexionsstrahls (10) vor den beiden Fotoempfängern (5.7, 5.8) ein Strahlteiler (5.9) angeordnet ist und daß jeder Fotoempfänger (5.7, 5.8) einen Teilstrahl des Reflexionsstrahls (10) empfängt.

6. Meßvorrichtung nach einem der Ansprüche 1 bis 3,
**dadurch gekennzeichnet,**
**daß** vor der Fotoempfängereinrichtung (5.7) eine Sammellinse (5.6) angeordnet ist.

7. Meßvorrichtung nach einem der vorhergehenden Ansprüche,
**dadurch gekennzeichnet,**
**daß** die Sendeoptik und die Empfangsoptik in einem gemeinsamen Träger integriert sind und
**daß** der Träger zum Aufstellen auf der Schicht eine Dreipunktauflage aufweist.

8. Meßvorrichtung nach einem der vorhergehenden Ansprüche,
**dadurch gekennzeichnet,**
**daß** die Sendeoptik im Strahlengang des Eingangsstrahls (9) einen Polarisator (5.2) und eine λ/4-Platte aufweist und
**daß** der Polarisator (5.2) oder der Analysator (5.4) um eine zu seiner Fläche normale Achse rotierend antreibbar angeordnet ist.

## Claims

1. Ellipsometer measuring instrument for determining the thickness of a layer applied to a substrate, having a light source (3) emitting an entrance beam (9), a transmitting optical system directing the polarized entrance beam (9) to a point of impingement (P) on the substrate, and the receiving optical system, which directs the reflection beam (10) formed at the point of impingement (P) to a photoreceiver device (5.7, 5.8) and has an analyser (5.4), the direction of polarization of the entrance beam (9) and of the analyser (5.4) being changed temporally relative to one another, and the changes in intensity thereby produced being evaluated by means of an evaluation device (7) for determining the layer thickness, **characterized in that** an angle measuring instrument (5.7, 5.8, 7.1) is provided with the aid of which the angle (β) of the reflection beam (10) relative to a tangential plane of the substrate (1) at the point of impingement (P) can be detected, and **in that** the layer thickness can be determined by means of the evaluation device (7) as a function of the detected angle (β).

2. Measuring instrument according to Claim 1, **characterized in that** the angle measuring instrument has a photoreceiver unit (5.7, 5.8) that is sensitive to position in the x- and/or y-direction, and an evaluation stage with the aid of which it is possible to calculate the reflection angle (β) from the positional data and from distance data.

3. Measuring instrument according to Claim 2, **characterized in that** the changes in intensity, and the position of the reflection beam (10) are detected with the aid of the same photoreceiver (5.7) of the photoreceiver device.

4. Measuring instrument according to Claim 2 or 3, **characterized in that** the photoreceiver unit has two position-sensitive photoreceivers (5.7, 5.8) arranged at a different distance from the point of impingement (P) in the beam path of the reflection beam (10), and **in that** the angle (β) is calculated on the basis of the different positions of the reflection beam (10) on the two photoreceivers (5.7, 5.8).

5. Measuring instrument according to Claim 4, **characterized in that** a beam splitter (5.9) is arranged in the beam path of the reflection beam (10) in front of the two photoreceivers (5.7, 5.8), and **in that** each photoreceiver (5.7, 5.8) receives a partial beam of the reflection beam (10).

6. Measuring instrument according to one of Claims 1 to 3, **characterized in that** a positive lens (5.6) is arranged in front of the photoreceiver device (5.7).

7. Measuring instrument according to one of the preceding claims, **characterized in that** the transmitting optical system and the receiving optical system are integrated in a common holder, and **in that** the holder has a three-point support for mounting on the layer.

8. Measuring instrument according to one of the preceding claims, **characterized in that** the transmitting optical system has a polarizer (5.2) and a λ/4 plate in the beam path of the entrance beam (9), and **in that** the polarizer (5.2) or the analyser (5.4) is arranged such that it can be driven to rotate about an axis normal to its surface.

## Revendications

1. Dispositif de mesure - ellipsomètre pour déterminer l'épaisseur d'une couche déposée sur un substrat avec une source lumineuse (3) émettant un rayon d'entrée (9), une optique d'émission dirigeant le rayon d'entrée (9) polarisé vers un point d'impact (P) du substrat et une optique de réception présentant un analyseur (5.4) dirigeant le rayon réfléchissant (10) formant le point d'impact (P) vers un ensemble photorécepteur (5.7, 5.8), dans lequel la direction de polarisation du rayon d'entrée (9) et de l'analyseur (5.4) est modifiée temporellement d'une manière relative l'une par rapport à l'autre et les changements d'intensité ainsi générés sont interprétés au moyen d'une installation d'exploitation (7) pour déterminer l'épaisseur de la couche,
**caractérisé en ce qu'**
un ensemble de mesure d'angle (5.7, 5.8, 7.1) est prévu pour saisir l'angle (β) du rayon réfléchissant (10) au niveau du point d'impact (P) par rapport à un plan tangentiel du substrat (1), et
l'épaisseur de la couche peut être déterminée au moyen de l'installation d'exploitation (7) en fonction de l'angle (β) obtenu.

2. Dispositif de mesure selon la revendication 1,
**caractérisé en ce que**
l'ensemble de mesure d'angle présente un ensemble photorécepteur (5.7, 5.8) sensible au positionnement en direction x et/ou y, et un étage d'exploitation pour calculer l'angle de réfléchissement (β) à partir des données de positionnement et des données de distance.

3. Dispositif de mesure selon la revendication 2,
**caractérisé en ce que**
les changements d'intensité et la position du rayon réfléchissant (10) sont saisis avec le même photorécepteur (5.7) de l'ensemble photorécepteur.

4. Dispositif de mesure selon la revendication 2 ou 3,
**caractérisé en ce que**
l'ensemble photorécepteur présente deux photorécepteurs (5.7, 5.8) sensibles au positionnement disposés à une distance différente du point d'impact (P) dans le parcours optique du rayon réfléchissant (10), et
l'angle (β) est calculé sur la base des positions différentes du rayon réfléchissant (10) sur les deux photorécepteurs (5.7, 5.8).

5. Dispositif de mesure selon la revendication 4,
**caractérisé en ce qu'**
un séparateur de faisceau (5.9) est disposé dans le parcours optique du rayon réfléchissant (10) avant les deux photorécepteurs (5.7, 5.8), et
chaque photorécepteur (5.7, 5.8) reçoit un rayon partiel du rayon réfléchissant (10).

6. Dispositif de mesure selon l'une des revendications 1 à 3,
**caractérisé en ce qu'**
une lentille convexe (5.6) est disposée avant l'ensemble photorécepteur (5.7).

7. Dispositif de mesure selon l'une des revendications précédentes,
**caractérisé en ce que**
l'optique d'émission et l'optique de réception sont intégrées dans un support commun, et
le support à disposer sur la couche présente un appui à trois points.

8. Dispositif de mesure selon l'une des revendications précédentes,
**caractérisé en ce que**
l'optique d'émission présente un polariseur (5.2) et une plaque λ/4 dans le parcours optique du rayon d'entrée (9), et
le polariseur (5.2) ou l'analyseur (5.4) est disposé pour être commandé en rotation autour d'un axe normal par rapport à sa surface.
